Europäisches Patentamt

European Patent Office

Office européen des brevets

(11) Veröffentlichungsnummer: **0 056 459**
A1

(12) **EUROPÄISCHE PATENTANMELDUNG**

(21) Anmeldenummer: **81110305.0**

(22) Anmeldetag: **10.12.81**

(51) Int. Cl.³: **C 01 B 33/18**
**B 01 D 53/34**

(30) Priorität: **21.01.81 DE 3101720**

(43) Veröffentlichungstag der Anmeldung:
**28.07.82 Patentblatt 82/30**

(84) Benannte Vertragsstaaten:
**BE DE FR GB**

(71) Anmelder: **Degussa Aktiengesellschaft**
**Weissfrauenstrasse 9**
**D-6000 Frankfurt am Main 1(DE)**

(72) Erfinder: **Koth, Detlev, Dr.**
**Im Proli 28**
**D-7889 Grenzach 1(DE)**

(54) Verfahren zur Entfernung von Halogen aus den Reaktionsabgasen bei der pyrogenen Herstellung von Siliciumdioxid.

(57) Verfahren zur Entfernung von Halogen aus den Reaktionsabgasen bei der pyrogenen Herstellung von Siliciumdioxid.

Bei der pyrogenen Herstellung von Siliciumdioxid aus Siliciumhalogenverbindungen entsteht in einer Nebenreaktion elementares Halogen, welches zu einer unerwünschten Verunreinigung des Siliciumdioxides führen kann.

Zur Entfernung des Halogen werden während des Abkühlens die Reaktionsprodukte mit Methan oder methanhaltigen Gasen, wie z.B. Erdgas vermischt.

EP 0 056 459 A1

81 106 FH

Degussa Aktiengesellschaft
6000 Frankfurt am Main 1

Verfahren zur Entfernung von Halogen aus den Reaktionsabgasen bei der pyrogenen Herstellung von Siliciumdioxid

Bei der pyrogenen Herstellung von feinstteiligem Siliciumdioxid werden flüchtige oder verdampfbare Verbindungen des Siliciums zusammen mit brennbaren oder Wasserdampf bildenden Gasen entweder getrennt oder in Mischung einem Brenner zugeführt.

Dabei werden das brennbare und das Sauerstoff enthaltende Gas in einem solchen Mengenverhältnis, welches sowohl eine vollständige Verbrennung des brennbaren Gases als auch die Hydrolyse der verdampfbaren Verbindung des Siliciums gewährleistet, zugeführt.

Werden als Ausgangsstoffe anorganische oder organische Halogenverbindungen des Siliciums eingesetzt, so fällt das Siliciumdioxid gemeinsam mit einem Halogenwasserstoff enthaltenden Abgas, welches in entsprechenden Abscheidevorrichtungen von dem Siliciumdioxid abgetrennt wird, an. In einer Nebenreaktion wird elementares Halogen gebildet. Je nach Führung der Reaktionsbedingungen für die Bildung des Siliciumdioxides entstehen, bezogen auf die Menge an gebilde-

81 106 FH

- 3. -

ten Halogenwasserstoff, 4 bis 10 Gew.-% elementares Halogen. Diese Nebenreaktion ist unerwünscht, weil das Halogen zu einer Verunreinigung des Siliciumdioxides führen kann.

Es ist bekannt, bei einem pyrogenen Verfahren zur Herstellung von Siliciumdioxid das entstandene elementare Halogen, z.B. Chlor, aus dem Reaktionsabgas zu entfernen, indem man das gebildete elementare Halogen mit Wasserstoff während des Abkühlens der Reaktionsprodukte unterhalb der Reaktionstemperatur des Wasserstoffs mit den in dem Reaktionsabgas enthaltenden Sauerstoff reduziert (DE-OS 25 33 925).

Bei diesem bekannten Verfahren, bei welchem $SiCl_4$ (Siliciumtetrachlorid) als Ausgangsstoff für die Herstellung von Siliciumdioxid verwendet wird, durchläuft das entstandene Gemisch aus Reaktionsabgas und Siliciumdioxid innerhalb einer relativ langen Kühlstrecke ein Temperaturgefälle von 1000 bis 200°C während des Abkühlens. Der zusätzliche Wasserstoff wird in einem Bereich der Kühlstrecke eingeführt, in welcher die Reaktionsabgase noch eine Temperatur von 500 bis 700°C aufweisen. Eine Zugabe des Wasserstoffes bei einer Temperatur über 700°C ist nicht zu empfehlen, da hier bereits eine Reaktion des Wasserstoffes mit dem Sauerstoff eintritt. Die Zugabe des Wasserstoffes bei einer Temperatur von unter 500°C ist ebenfalls nicht zu empfehlen, da hier die Reaktionsgeschwindigkeit der Reaktion des Wasserstoffes mit dem elementaren Chlor zu langsam ist.

Die besten Ergebnisse können erzielt werden, wenn man den elementaren Wasserstoff innerhalb des engen Temperaturbereiches zwischen 550 und 630°C einleitet.

81 106 FH

- 4. -

Der genaue Einleitungspunkt für den elementaren Wasser- . stoff in der Kühlstrecke ist aber lastabhängig. Bei produktionsbedingten Änderungen in der Strömungsgeschwindigkeit muß die Einleitungsstelle für den elementaren Wasserstoff in der Kühlstrecke verlegt werden, weil mit der Änderung der Strömungsgeschwindigkeit auch das Temperaturgefälle in der Kühlstrecke verändert wird.

Dies erfordert einen umständlichen Umbau der Einleitungsvorrichtung an der Kühlstrecke, der gegebenenfalls eine Abschaltung der Produktionsanlage notwendig macht.

Gegenstand der Erfindung ist ein Verfahren zur Entfernung von Halogen aus den Reaktionsabgasen bei der pyrogenen Herstellung von Siliciumdioxid, welches dadurch gekennzeichnet ist, daß man während des Abkühlens der Reaktionsabgasen die Reaktionsabgase mit Methan oder methanhaltigem Gas vermischt.

Als methanhaltiges Gas kann man z.B. Erdgas oder reines Methan verwenden.

Das Erdgas kann beispielsweise die in der Tabelle I aufgeführten Zusammensetzungen aufweisen:

-5-

81 106 FH

- 5. -

Tabelle 1

|  | | 1 | 2 | 3 |
|---|---|---|---|---|
| $CO_2$ | Vol.% | 1,17 | 1.07 | 1,20 |
| $N_2$ | Vol.% | 5,25 | 4.75 | 5.14 |
| $O_2$ | Vol.% | 0,0 | 0,0 | 0,0 |
| $CH_4$ | Vol.% | 87,30 | 88,00 | 86,90 |
| $C_2H_6$ | Vol.% | 4,47 | 4,37 | 4,77 |
| $C_3H_8$ | Vol.% | 1,26 | 1,24 | 1,40 |
| $C_4H_{10}$ | Vol.% | 0,38 | 0,38 | 0,41 |
| $C_5H_{12}$ | Vol.% | 0,09 | 0,10 | 0,10 |
| $C_6H_{14}$ | Vol.% | 0,03 | 0,04 | 0,03 |
| $C_7H_{16}$ | Vol.% | 0,02 | 0,02 | 0,02 |
| $C_8H_{18}$ | Vol.% | 0,01 | 0,01 | 0,01 |
| $C_6H_6$ | Vol.% | 0,02 | 0,02 | 0,02 |
| $Ho_n$ | kcal/m³ | 9550 | 9603 | 9609 |
| $Hu_n$ | kcal/m³ | 8628 | 8675 | 8682 |
| d (Luft=1) | | 0,632 | 0,629 | 0,636 |
| Wo | | 12010 | 12110 | 12050 |
| $H_2S$ | mg/m³ | ---------etwa 0,2 -------- | | |
| Gesamtschwefel | mg/m³ | ---------etwa 5 -------- | | |

In der Regel kann das Erdgas einen Methangehalt von 80
bis 90 Vol.% aufweisen.
Die Menge an Methan oder methanhaltigem Gas richtet sich
nach den Reaktionsbedingungen für das herzustellende spezifische Siliciumdioxid. Dabei kann soviel Methan oder methanhaltiges Gas zugegeben werden, daß in den endgültig erhaltenen Abgas eine Menge an Methan von 0,1 bis 1,0 Vol%
gemessen wird.

81 106 FH

- 6. -

Die Zugabe des Methans oder methanhaltigen Gases kann über die gesamte Kühlstrecke an mehreren, z.B. 3 bis 6 Stellen erfolgen, wobei an jeder Stelle ein Einfachrohr eingesetzt wird.

In einer bevorzugten Ausführungsform der Erfindung leitet man das Methan oder methanhaltige Gas bei einer Temperatur von 650 bis 900°C, insbesondere zwischen 750° und 900°C in die Kühlstrecke ein.

Als Ausgangsstoff für die Herstellung des Siliciumdioxides kann man verdampfbare Halogenverbindungen des Siliciums verwenden.

In einer vorzugsweisen Ausführungsform kann als Halogenverbindung das entsprechende Chlorid des Siliciums als Ausgangsstoff verwendet werden. Aber auch organische Halogenverbindungen können eingesetzt werden. So ist für die Herstellung von Siliciumdixod die Verwendung von $SiHCl_3$, $SiCl_2H_2$, $SiCl_4$, $CH_3-SiCl_3$, $(CH_3)_2SiCl_2$, $(CH_3)_3-SiCl$ $CH_3-CH_2-SiCl_3$, oder $(CH_3-CH_2)_2 SiCl_2$ möglich. Bei der Verwendung dieser Ausgangsstoffe bildet sich als elementares Halogen Chlor, welches aus den Reaktionsabgasen entfernt werden muß.

Das erfindungsgemäße Verfahren weist den Vorteil auf, daß etwa nur die Hälfte der Menge an Methan oder methanhaltigem Gas im Vergleich zu der Menge an Wasserstoff die bei dem Verfahren gemäß dem Stande der Technik notwendig ist, umgesetzt werden braucht.

81 106 FH

Eine Zumischung von Inertgasen ist nicht notwendig.

Weiterhin von Vorteil ist, daß der Rohstoff Erdgas leicht zugänglich ist.
Eine Temperaturabhängigkeit der Zugabe des Methans oder methanhaltigen Gases in einem größeren Bereich ist nicht gegeben.

Das erfindungsgemäße Verfahren wird an Hand der folgenden Beispiele näher erläutert:

Pyrogenes Siliciumdioxid wird in einer bekannten Brennervorrichtung hergestellt. Dabei werden als Ausgangsstoffe Siliciuimtetrachlorid, Luft und Wasserstoff verwendet.

Die einzelnen Daten der Verfahrensführung sind in der Tabelle 2 aufgeführt:

## Tabelle 2

| Beispiel | SiCl$_4$ | Erdgas | Temp.[1] | Cl$_2$ im Abgas[2] |
|---|---|---|---|---|
| | kg/h | m³/h | °C | % |
| 1 | 84 | – | – | 5.5 |
| 2 | 84 | 2 | 720–730 | 0 |
| 3 | 84 | 1 | 720–730 | <0.05 |
| 4 | 84 | – | 750 | 4.1 |
| 5 | 84 | 2 | 750 | – |
| 6 | 84 | 1 | 750 | <0.05 |
| 7 | 84 | 2 | 600 | 2.4 |
| 8 | 84 | 1 | 600 | 3.0 |
| 9 | 84 | – | – | 5.5 |
| 10 | 84 | 2 | 660 | 0 |
| 11 | 84 | 1 | 760 | 0.3 |
| 12 | 84 | 1 | 870 | <0.05 |
| 13 | 22 | – | – | 5.3 |
| 14 | 22 | 2 | 770 | 0 |
| 15 | 22 | 1 | 770 | <0.02 |

Beispiele 1 – 3 entsprechend einer BET-Oberfläche von ca. 130  
4 – 8 entsprechen einer BET-Oberfläche von ca. 150  
9 –12 entsprechen einer BET-Oberfläche von ca. 200  
13 –15 entsprechen einer BET-Oberfläche von ca. 380

[1] Diejenige Temperatur des Reaktionsabgases, bei der die Zugabe der Erdgases erfolgte

[2] Gewichtsprozent freies Chlor bezogen auf den HCl-Anteil

81 106 FH

Degussa Aktiengesellschaft
6000 Frankfurt am Main 1

Verfahren zur Entfernung von Halogen aus den Reaktionsabgasen bei der pyrogenen Herstellung von Siliciumdioxid

Patentanspruch

1. Verfahren zur Entfernung von Halogen aus den Reaktionsabgasen bei der pyrogenen Herstellung von Siliciumdioxid dadurch gekennzeichnet, daß man während des Abkühlens der Reaktionsabgase die Reaktionsabgase mit Methan oder methanhaltigem Gas vermischt.

**0056459**

Nummer der Anmeldung

# EUROPÄISCHER RECHERCHENBERICHT

Europäisches Patentamt

EP 81 11 0305.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 902 110 (DU PONT DE NEMOURS AND CO.) <br><br> * Ansprüche 1, 6; Seite 9, Beispiel * <br> -- | 1 |
| D,A | DE - A1 - 2 533 925 (DEGUSSA) <br> -- | |
| A | DE - A - 2 153 671 (DEGUSSA) <br> -- | |
| A | EP - A1 - 0 021 127 (DEGUSSA) <br> ---- | |

### KLASSIFIKATION DER ANMELDUNG (Int Cl ³)

C 01 B 33/18
B 01 D 53/34

### RECHERCHIERTE SACHGEBIETE (Int Cl.³)

B 01 D 53/00
C 01 B 13/00
C 01 B 33/00
C 01 G 1/00
F 23 G 7/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Berlin | 08-04-1982 | KESTEN |

EPA form 1503.1   06.78